# EUROPEAN PATENT APPLICATION

(11) **EP 2 293 184 A1**
(43) Date of publication of application: **09.03.2011**
(21) Application number: 09770093.4
(22) Date of filing: 19.06.2009
(51) Int. Cl.: G06F 3/153, G09G 3/20, G09G 5/00, H04L 9/32

(54) **WRITE-IN SYSTEM**

(30) Priority: 24.06.2008 JP 2008164679
(71) Applicant: Panasonic Electric Works Co., Ltd., Kadoma-shi Osaka 571-8686 (JP)
(72) Inventor: KAWAKAMI, Yasuhiro, Osaka 571-8686 (JP); KOIKE, Sadamitsu, Osaka 571-8686 (JP)
(74) Representative: Appelt, Christian W.
(86) International application number: PCT/JP2009/061204
(87) International publication number: WO 2009/157383

(57) **Abstract**

In a writing device 3, a controller 34 controls an authentication communication unit 32 so as to transmit authentication data to a display device 2, prior to writing main data into the display device 2, in order to specify the display device 2 into which the main data is to be written. After carrying out the authentication, the controller 34 controls a main communication unit 31 so as to transmit the main data stored in a memory 30 to the display device 2 into which the main data is to be written, by wireless communication. In the display device 2, a controller 25 controls an authentication communication unit 21 so as to receive the authentication data from the writing device 3. The controller 25 controls a main communication unit 20 so as to receive the main data from the writing device 3 by wireless communication after the completion of the authentication. Therefore, when the main data is written into the display device 2 from the writing device 3, it is possible to avoid wiring problems, and provide the display device 2 with an improved appearance.

## Description

### TECHNICAL FIELD

The present invention relates to a writing system to write data, which is necessary to operate a display device, into the display device used to monitor and direct operations of equipment.

### BACKGROUND ART

Conventionally, a display device is used in order to monitor and direct operations of peripheral equipment (for example, refer to Patent Document 1). For such a purpose, the display device preliminarily stores data such as image data for images to be displayed in the display device and operational data for defining operation tasks for the peripheral equipment.

A known writing systems to write (rewrite) the above-mentioned data into the display device is a system in which a writing device such as a personal computer is connected to the display device by cables or the like, so as to transmit the data from the writing device to the display device by a wired communication.

### CITATION LIST

### PATENT LITERATURE

Patent Document 1: Japanese Patent Application Laid-Open Publication No. 2000-148111

### SUMMARY OF INVENTION

### TECHNICAL PROBLEM

Such a conventional writing system, however, requires cables to connect the writing device and the display device to write (rewrite) the data into the display device from the writing device. Accordingly, there were disadvantages such as wiring trouble and a defect in appearance because of the necessity of wiring connectors provided in front of the display device.

The present invention has been devised in view of the above-mentioned issues. It is an object of the present invention to provide a writing system that does not have a wired connection when writing data into a display device from a writing device, and provides a display device with an improved appearance.

### SOLUTION TO PROBLEM

The present invention provides a writing system, comprising: at least one display device used to monitor and direct an operation of equipment; and a writing device used when main data to define an operation of the display device is written into the display device, wherein the writing device includes: a storage unit that preliminarily stores the main data; a writing-side main communication unit that transmits the main data to the display device by a wireless communication; a writing-side authentication communication unit that transmits authentication data to the display device, the authentication data specifying the display device into which the main data is to be written; and a writing-side control unit that controls the writing-side main communication unit and the writing-side authentication communication unit, the display device includes: a display-side main communication unit that receives the main data from the writing device by the wireless communication; a display-side authentication communication unit that receives the authentication data from the writing device; and a display-side control unit that controls the display-side main communication unit and the display-side authentication communication unit, the writing-side control unit controls the writing-side authentication communication unit so as to transmit the authentication data to the display device, prior to writing the main data into the display device, in order to specify the display device into which the main data is to be written, and controls the writing-side main communication unit so as to transmit the main data to the display device after authenticating the display device into which the main data is to be written, and the display-side control unit controls the display-side authentication communication unit so as to receive the authentication data from the writing device, and controls the display-side main communication unit so as to receive the main data from the writing device after the authentication of the display device.

Further, the present invention provides a writing system, wherein at least one of the display-side control unit and the writing-side control unit maintains at least one of the display-side main communication unit and the writing-side main communication unit in an off state until the authentication is carried out, and shifts the at least one of the display-side main communication unit and the writing-side main communication unit from the off state to an on state after carrying out the authentication.

Further, the present invention provides a writing system, wherein the writing-side authentication communication unit transmits the authentication data to the display-side authentication communication unit by a contactless communication.

Further, the present invention provides a writing system, wherein the writing device is attached to a human body, and the writing-side authentication communication unit and the display-side authentication communication unit communicate with each other via a transmission path including the human body.

Further, the present invention provides a writing system, wherein the writing device includes an input unit to input authentication information of the display device into which the main data is to be written.

Further, the present invention provides a writing system, wherein the writing device includes a display unit to display the authentication information that is input by the input unit.

Further, the present invention provides a writing system, wherein the writing device includes an internal power supply to drive at least the writing-side main communication unit.

Further, the present invention provides a writing system, wherein the writing device includes a writing-side communication unit including a first transmission mode, as the writing-side main communication unit, that transmits the main data by a wireless communication using a wireless signal with a first electrical intensity level, and including a second transmission mode, as the writing-side authentication communication unit, that transmits the authentication data by a second wireless communication using a wireless signal with a second electrical intensity level, and the display device includes a display-side communication unit including a first receiving mode, as the display-side main communication unit, that receives the main data by the wireless communication, and including a second receiving mode, as the display-side authentication communication unit, that receives the authentication data by the second wireless communication.

Further, the present invention provides a writing system, wherein at least one of the writing device and the display device includes a second storage unit, the writing-side main communication unit and the display-side main communication unit are capable of switching a plurality of frequency channels, the second storage unit stores communication history including the frequency channels and communication quality, the frequency channels being switched by the writing-side main communication unit and the display-side main communication unit, and the writing-side control unit and the display-side control unit control frequency-channel switching performed by the writing-side main communication unit and the display-side main communication unit, by use of the communication history stored in the second storage unit.

Further, the present invention provides a writing system, wherein the writing device includes a detection unit that detects an electrical intensity level of a wireless signal to be transmitted from the writing-side main communication unit, the writing-side main communication unit functions to change the electrical intensity level of the wireless signal, and the writing-side control unit adjusts the detected electrical intensity level of the wireless signal transmitted from the writing-side main communication unit depending on the electrical intensity level detected by the detection unit.

### ADVANTAGEOUS EFFECTS OF INVENTION

According to the present invention, the main data is transmitted by wireless communication after carrying out the authentication by use of the authentication data when main data is written into the display device from the writing device. Therefore, it is not necessary to use cables to connect the writing device and the display device, or use connectors for cable wiring. Accordingly, the writing system according to the present invention can avoid wiring problems, and provide the display device with an improved appearance. Moreover, the writing-side authentication communication unit specifies the display device into which the main data is to be written. Therefore, it is possible to write the main data into the display device reliably while preventing adjacent display devices from erroneously receiving the main data.

According to the present invention, after the authentication is carried out formally, the display-side main communication unit and the writing-side main communication unit that communicate the main data are shifted from an off state to an on state. Therefore, it is possible to operate the display-side main communication unit and the writing-side main communication unit only when necessary. Thus, low power consumption of the display device and the writing device can be achieved.

According to the present invention, since a contactless communication authentication is carried out, the display device into which the main data is to be written can be specified without using a wired means such as cables.

According to the present invention, the authentication data is transmitted by intra-body communication. Therefore, it is possible to specify the display device into which the main data is to be written more reliably without ambient noise influence.

According to the present invention, authentication information of the display device into which the main data is to be written is input to the writing device. Therefore, the configuration of the display device can be controlled by the writing device.

According to the present invention, the display unit displays the authentication information that is input by the input unit. Therefore, a user can confirm the input authentication information.

According to the present invention, the writing device includes an internal power supply that is necessary to transmit the main data, so as to facilitate portability of the writing device. This makes the writing device more convenient to write the main data.

According to the present invention, the writing-side communication unit has a first transmission mode that functions as a writing-side main communication unit, and has a second transmission mode that functions as a writing-side authentication communication unit. Further, the display-side communication unit has a first receiving mode that functions as a display-side main communication unit, and has a second receiving mode that functions as a display-side authentication communication unit. Therefore, the writing device requires only one writing-side communication unit, and the display device requires only one display-side communication unit. Accordingly, it is possible to downsize both the writing device and the display device and decrease production cost.

According to the present invention, communication history is stored in a memory, so as to confirm previous communication quality. Therefore, an adequate frequency channel can be configured. Accordingly, it is possible to improve communication quality of main data writing.

According to the present invention, an electrical intensity level of a wireless signal transmitted from the writing-side main communication unit is detected. Therefore, influences on other display devices or wireless equipment used in the same frequency band can be reduced.

### BRIEF DESCRIPTION OF DRAWINGS

[Fig. 1] Fig. 1 is a block diagram showing a configuration of a writing system according to Embodiment 1.
[Fig. 2] Fig. 2 is a schematic diagram showing a configuration of a writing system according to Embodiment 1
[Fig. 3] Fig. 3 is a block diagram showing a configuration of a writing device according to Embodiment 3.
[Fig. 4] Fig. 4 is a block diagram showing a configuration of a writing device according to Embodiment 4.
[Fig. 5] Fig. 5 is a block diagram showing a configuration of a writing system according to Embodiment 5.

### DETAILED DESCRIPTION OF THE PREFERED EMBODIMENTS

### (Embodiment 1)

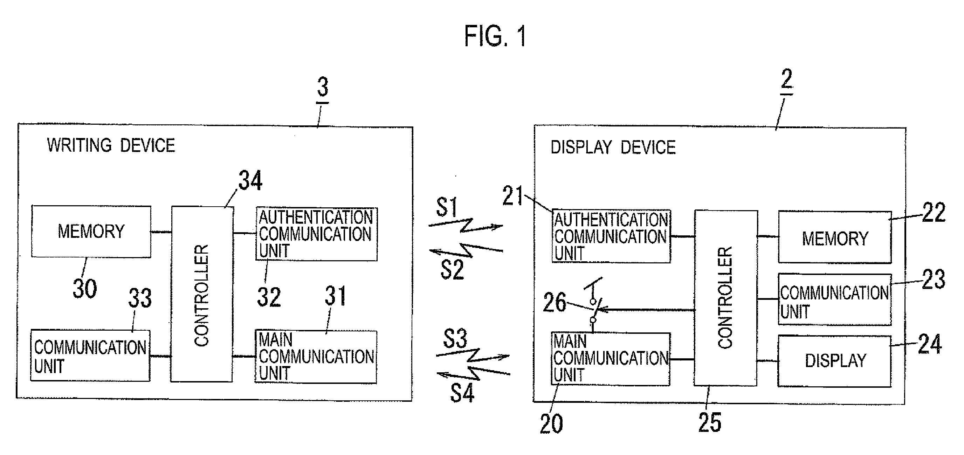

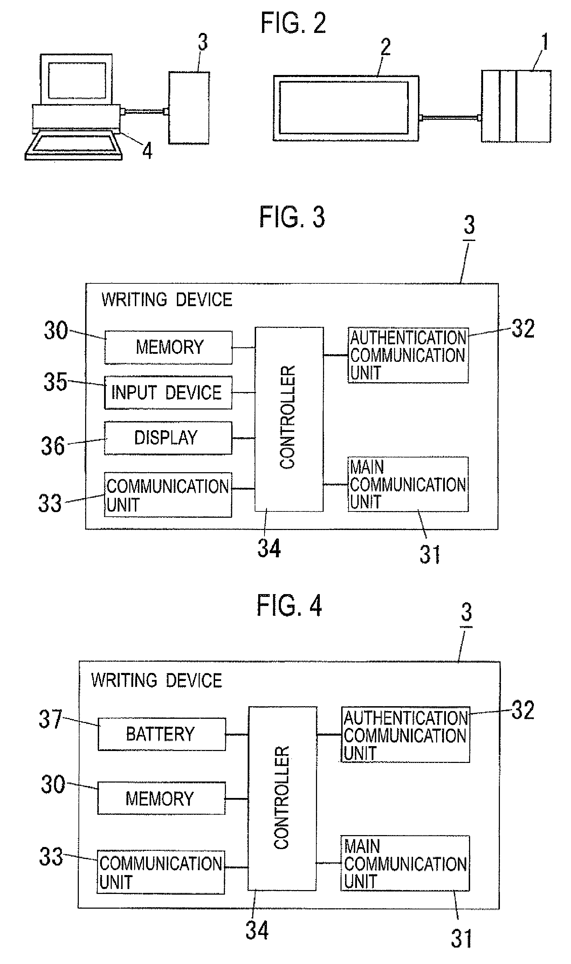

The following is a description of a configuration of Embodiment 1 with reference to Figs. 1 and 2. As shown in Fig. 2, Embodiment 1 includes an apparatus 1, a display device 2 used to monitor and direct operations of the apparatus 1, a writing device 3 used when main data described later is written into the display device 2, and a personal computer 4 to prepare the main data to be written into the display device 2 from the writing device 3.

Examples of the apparatus 1 include a sequencer and a programmable logic controller (PLC).

For example, the personal computer 4 is remote from the display device 2. Software for preparing the main data is installed on the personal computer 4. The main data prepared in the personal computer 4 is transmitted to the writing device 3 from the personal computer 4 when the writing device 3 is connected to the personal computer 4.

Examples of the main data include image data for images to be displayed in the display device 2 and operational data for defining operation tasks for the apparatus 1.

The following is a description of a configuration of the writing device 3 with reference to Fig. 1. The writing device 3 includes a memory 30 to preliminarily store the main data, a main communication unit 31 to transmit the main data to the display device 2, an authentication communication unit 32 to transmit authentication data to the display device 2 so as to specify the display device 2 into which the main data is to be written, a communication unit 33 to receive the main data from the personal computer 4, and a controller 34 to control the writing device 3 as a whole.

The memory 30 preliminarily stores the main data prepared in the personal computer 4. The memory 30 corresponds to a storage unit of the present invention.

The main communication unit 31 divides the main data into a plurality of packets under the control of the controller 34, so as to transmit each packet to the display device 2 as a signal S3 by wireless communication. The main communication unit 31 receives a signal S4 from the display device 2. Information contained in the signal S4 is transmitted to the controller 34. In addition, the main communication unit 31 includes a function to vary electrical intensity levels of wireless signals. The main communication unit 31 corresponds to a writing-side main communication unit of the present invention.

The authentication communication unit 32 is a contactless communication means such as RFID (Radio Frequency Identification) and infrared communication. The authentication processing unit 32 transmits authentication data to the display device 2 as a signal S1 as controlled by the controller 34. The authentication communication unit 32 receives a signal S2 from the display device 2. Information contained in the signal S2 is transmitted to the controller 34. The authentication communication unit 32 corresponds to a writing-side authentication communication unit of the present invention.

The controller 34 controls the authentication communication unit 32, so that the authentication communication unit 32 transmits the authentication data to the display device 2, prior to writing the main data into the display device 2, in order to specify the display device 2 into which the main data is to be written. Then, the controller 34 authenticates the display device 2 by confirming information as a confirmation signal from the display device 2 into which the main data is to be written. Namely, the controller 34 determines that the authentication is carried out properly. The controller 34 corresponds to a writing-side control unit of the present invention.

The controller 34 also controls the main communication unit 31, so that the main communication unit 31 transmits the main data to the display device 2 by wireless communication, after authenticating the display device 2 into which the main data is to be written. In other words, when the authentication communication unit 32 receives the signal S2 for notifying the completion of the authentication, the controller 34 controls the main communication unit 31 so as to transmit the main data to the display device 2 into which the main data is to be written by wireless communication.

Furthermore, the controller 34 detects the electrical intensity level of the wireless signal transmitted from the main communication unit 31. Subsequently, the controller 34 adjusts the detected electrical intensity level of the wireless signal transmitted from the main communication unit 31 depending on its level at the time of the detection. The controller 34 also corresponds to a detection unit of the present invention.

The following is a description of a configuration of the display device 2 with reference to Fig. 1. The display device 2 includes a main communication unit 20 to receive the main data from the writing device 3, an authentication communication unit 21 to receive the authentication data from the writing device 3, a memory 22 to store the main data, a communication unit 23 to communicate with the apparatus 1, a display 24 to display information of the apparatus 1, and a controller 25 to control the display device 2 as a whole.

The main communication unit 20 receives the signal S3 from the writing device 3 by wireless communication. The main data contained in the signal S3 is transmitted to the controller 25. The main communication unit 20 transmits, to the writing device 3, the signal S4 for notifying receipt of the signal S3. The main communication unit 20 corresponds to a display-side main communication unit of the present invention.

The authentication communication unit 21 receives the signal S1 from the writing device 3. The authentication data contained in the signal S1 is transmitted to the controller 25. The authentication communication unit 21 transmits, to the writing device 3, the signal S2 for notifying the completion of the authentication. The authentication communication unit 21 corresponds to a display-side authentication communication unit of the present invention.

The controller 25 controls the authentication communication unit 21, so that the authentication communication unit 21 receives the authentication data from the writing device 3. The controller 25, which obtains the authentication data received in the authentication communication unit 21, controls the authentication communication unit 21 so as to transmit, to the writing device 3, a signal for notifying the confirmation of authentication information when the authentication information contained in the obtained authentication data is its own authentication information. The controller 25 corresponds to a display-side control unit of the present invention.

The controller 25 also controls the main communication unit 20, so that the main communication unit 20 receives the main data from the writing device 3 by wireless communication after the completion of the authentication.

Further, the controller 25 maintains a switch 26, which is provided in a power supply line from a power supply to the main communication unit 20, in an off position until the controller 25 determines that the authentication is carried out normally. Namely, the controller 25 turns off the main communication unit 20. When the controller 25 determines that the authentication is carried out normally, the controller 25 shifts the switch 26 from the off position to the on position. Accordingly, the controller 25 shifts the main communication unit 20 from the off state to the on state.

According to the present embodiment, the main data is transmitted by wireless communication after carrying out the authentication by use of the authentication data when the main data is written into the display device 2 from the writing device 3. Therefore, it is not necessary to use cables to connect the writing device 3 and the display device 2, or use connectors for cable wiring. Accordingly, the writing system according to the present embodiment can prevent wiring problems, and provide the display device 2 with an improved appearance.

According to the present embodiment, the authentication communication unit 32 specifies the display device 2 into which the main data is to be written. Therefore, it is possible to write the main data into the display device 2 reliably while preventing other adjacent display devices from erroneously receiving the main data. Namely, when the main data is simply transmitted by wireless communication, the main data may be erroneously transmitted not only to the display device into which the main data is to be written but also to other adjacent display devices if a signal intensity of a wireless signal that transmits the main data is high. However, the writing system according to the present embodiment can prevent such undesirable communication of the main data.

According to the present embodiment, after the authentication is carried out normally, the main communication unit 20 that receives the main data is shifted from the off state to the on state. Therefore, it is possible to operate the main communication unit 20 only when necessary. Thus, low power consumption of the display device 2 can be achieved.

According to the present embodiment, due to the contactless communication authentication, the display device 2 into which the main data is to be written can be specified without using a wired means such as cables.

According to the present embodiment, the electrical intensity level of the wireless signal transmitted from the main communication unit 31 is detected. Therefore, influences on other display devices 2 or wireless equipment used in the same frequency band can be reduced.

As a modified example of Embodiment 1, the power supply may stop supplying power to the main communication unit 31 until the controller 34 determines that the authentication is carried out normally, so that the controller 34 turns off the main communication unit 31. When the controller 34 determines that the authentication is carried out normally, the power supply starts supplying power to the main communication unit 31, so as to shift the main communication unit 31 from the off state to the on state.

### (Embodiment 2)

A writing system of Embodiment 2 differs from that of Embodiment 1 in that the writing device 3 is attached to a human, so as to transmit and receive authentication data by intra-body communication. The explanations of the elements in this embodiment identical to Embodiment 1 will not be repeated, while indicating the elements with the same numerals.

In the writing device 3 of the present embodiment, the authentication communication unit 32 transmits authentication data by intra-body communication, in which a human is a part of a transmission medium.

In the display device 2 of the present embodiment, the authentication communication unit 21 receives the authentication data via a human body in contact with a predetermined position of the display device 2.

Since the human body functions as a conductor, the writing device 3 is attached to a user. When a part of the user (such as a hand) to which the writing device 3 is attached comes in contact with the predetermined position of the display device 2 (a receivable position by the authentication communication unit 21), the authentication data from the authentication communication unit 32 is transmitted to the authentication communication unit 21 via the human body.

According to the present embodiment, the authentication data is transmitted by intra-body communication. Therefore, it is possible to specify the display device 2 into which main data is to be written more reliably without any influence such as ambient noise.

### (Embodiment 3)

A writing system of Embodiment 3 differs from that of Embodiment 1 (refer to Fig. 1) in that the writing device 3 includes an input device 35 and a display 36 as shown in Fig. 3. The explanations of the elements in this embodiment identical to Embodiment 1 will not be repeated, while indicating the elements with the same numerals.

The input device 35, such as a numeric keypad and a touch panel, is a device by which a user inputs authentication information of the display device 2 into which main data is to be written. The input device 35 corresponds to an input unit of the present invention.

The display 36 displays the authentication information that is input by the input device 35. The display 36 corresponds to a display unit of the present invention.

According to the present embodiment, the authentication information of the display device 2 into which main data is to be written is input to the writing device 3. Therefore, the configuration of the display device 2 can be controlled by the writing device 3.

According to the present embodiment, the display 36 displays the authentication information that is input by the input device 35. Therefore, the user can confirm the input authentication information.

### (Embodiment 4)

A writing system of Embodiment 4 differs from that of Embodiment 1 (refer to Fig. 1) in that the writing device 3 includes a battery 37 as shown in Fig. 4. The explanations of the elements in this embodiment identical to Embodiment 1 will not be repeated, while indicating the elements with the same numerals.

The battery 37 is a power supply to drive the main communication unit 31. The battery 37 corresponds to an internal power supply of the present invention.

According to the present embodiment, the writing device 3 includes the battery 37 that is necessary to transmit main data, so as to facilitate portability of the writing device 3. This makes the writing device 3 more convenient to write the main data.

### (Embodiment 5)

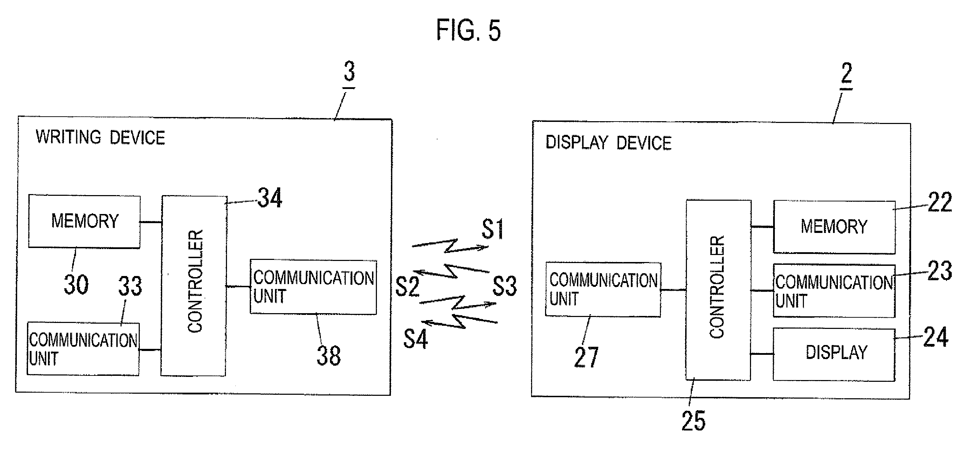

A writing system of Embodiment 5 differs from that of Embodiment 1 (refer to Fig. 1) in that the writing device 3 includes a communication unit 38 instead of the main communication unit 31 and the authentication communication unit 32, and the display device 2 includes a communication unit 27 instead of the main communication unit 20 and the authentication communication unit 21, as shown in Fig. 5. The explanations of the elements in this embodiment identical to Embodiment 1 will not be repeated, while indicating the elements with the same numerals.

In the writing device 3 of the present embodiment, the communication unit 38 has a first transmission mode, as a writing-side main communication unit, that transmits main data by a wireless communication using a wireless signal with a first electrical intensity level. The communication unit 38 also has a second transmission mode, as a writing-side authentication communication unit, that transmits authentication data by a second wireless communication using a wireless signal with an electrical intensity level that is, for example, lower than the first electrical intensity level of the wireless signal to transmit the main data. The communication unit 38 corresponds to a writing-side communication unit of the present invention.

In the first transmission mode, the communication unit 38 divides the main data into a plurality of packets under the control of the controller 34, so as to transmit each packet to the display device 2 as a signal S3 by wireless communication. The communication unit 38 receives a signal S4 from the display device 2. Information contained in the signal S4 is transmitted to the controller 34.

In the second transmission mode, the communication unit 38 transmits authentication data to the display device 2 as a signal S1 under the control of the controller 34. The communication unit 38 receives a signal S2 from the display device 2. Information contained in the signal S2 is transmitted to the controller 34.

The controller 34 controls the communication unit 38, so that the communication unit 38 transmits the authentication data by switching to the second transmission mode. After the completion of the authentication, the controller 34 controls the communication unit 38, so that the communication unit 38 transmits the main data by switching the second transmission mode to the first transmission mode.

In the display device 2 of the present embodiment, the communication unit 27 has a first receiving mode, as a display-side main communication unit, that receives the main data by a wireless communication. The communication unit 27 also has a second receiving mode, as a display-side authentication communication unit, that receives the authentication data by a second wireless communication. The communication unit 27 corresponds to a display-side communication unit of the present invention.

In the first receiving mode, the communication unit 27 receives the signal S3 from the writing device 3 by wireless communication. The main data contained in the signal S3 is transmitted to the controller 25. The communication unit 27 transmits, to the writing device 3, the signal S4 for notifying the receipt of the signal S3.

In the second receiving mode, the communication unit 27 receives the signal S1 from the writing device 3 by wireless communication. The authentication data contained in the signal S1 is transmitted to the controller 25. The communication unit 27 transmits, to the writing device 3, the signal S2 for notifying the confirmation that authentication information in the authentication data is its own authentication information.

The controller 25 controls the communication unit 27, so that the communication unit 27 receives the authentication data by switching to the second receiving mode. After the completion of the authentication, the controller 25 controls the communication unit 27, so that the communication unit 27 receives the main data by switching the second receiving mode to the first receiving mode.

According to the present embodiment, the communication unit 38 has the first transmission mode that functions as a writing-side main communication unit, and has the second transmission mode that functions as a writing-side authentication communication unit. Further, the communication unit 27 has the first receiving mode that functions as a display-side main communication unit, and has the second receiving mode that functions as a display-side authentication communication unit. Therefore, the writing device 3 requires only one writing-side communication unit, and the display device 2 requires only one display-side communication unit. Accordingly, it is possible to downsize both the writing device 3 and the display device 2 and decrease production cost.

According to the present embodiment, the authentication can be carried out close to the display device 2 by using an electrical intensity level (first electrical intensity level) lower than the electrical intensity level (first electrical intensity level) at the time of the main data communication. Therefore, the display device 2 into which the main data is to be written can be easily specified at authentication. Moreover, since the electrical intensity level is low at authentication, influence on other wireless equipment can be reduced.

### (Embodiment 6)

A writing system of Embodiment 6 differs from that of Embodiment 1 in that the main communication unit 31 and the main communication unit 20 shown in Fig. 1 can switch a plurality of channels that have different frequencies from each other (switching frequency channels). The explanations of the elements in this embodiment identical to Embodiment 1 will not be repeated, while indicating the elements with the same numerals.

In the writing device 3 of the present embodiment, the controller 34 measures communication quality according to the number of retransmissions of main data by the main communication unit 31. The communication quality measured by the controller 34 is stored in the memory 30 as communication history together with frequency channels switched by the main communication unit 31 and the main communication unit 20. The controller 34 controls frequency-channel switching of the main communication unit 31, using the communication history stored in the memory 30. Then, the controller 34 controls the main communication unit 31, so that the main communication unit 31 transmits information of the switched frequency channels to the display device 2. The memory 30 corresponds to a second storage unit of the present invention.

In the display device 2 of the present embodiment, the controller 25 controls frequency-channel switching performed by the main communication unit 20 according to the information of the frequency channels received by the main communication unit 20.

According to the present embodiment, the communication history is stored in the memory, so as to confirm previous communication quality. Therefore, an adequate frequency channel can be configured. Accordingly, it is possible to improve communication quality in main data writing.

As a modified example of Embodiment 6, the memory 22 of the display device 2 may store communication history instead of the memory 30 of the writing device 3. In such case, information of the communication quality measured by the controller 34 is transmitted to the display device 2. The memory 22 of the display device 2 receives the communication quality to store as communication history together with frequency channels. Similar to Embodiment 6, since such a configuration can also confirm previous communication quality by storing the communication history, an adequate frequency channel can be configured accordingly. In this case, the memory 22 corresponds to the second storage unit of the present invention.

### INDUSTRIAL APPLICABILITY

According to the present invention, when main data is written into the display device from the writing device, the main data is transmitted by wireless communication after carrying out authentication by use of authentication data. Therefore, it is not necessary to use cables to connect the writing device and the display device, and use connectors for cable wiring. Accordingly, the writing system according to the present invention can save trouble of wiring, and have an improved appearance of the display device.

## Claims

1. A writing system, comprising:
at least one display device used to monitor and direct an operation of equipment; and
a writing device used when main data to define an operation of the display device is written into the display device,
wherein the writing device includes:
a storage unit that preliminarily stores the main data;
a writing-side main communication unit that transmits the main data to the display device by a wireless communication;
a writing-side authentication communication unit that transmits authentication data to the display device, the authentication data specifying the display device into which the main data is to be written; and
a writing-side control unit that controls the writing-side main communication unit and the writing-side authentication communication unit,
the display device includes:
a display-side main communication unit that receives the main data from the writing device by the wireless communication;
a display-side authentication communication unit that receives the authentication data from the writing device; and
a display-side control unit that controls the display-side main communication unit and the display-side authentication communication unit,
the writing-side control unit controls the writing-side authentication communication unit so as to transmit the authentication data to the display device, prior to writing the main data into the display device, in order to specify the display device into which the main data is to be written, and controls the writing-side main communication unit so as to transmit the main data to the display device after authenticating the display device into which the main data is to be written, and
the display-side control unit controls the display-side authentication communication unit so as to receive the authentication data from the writing device, and controls the display-side main communication unit so as to receive the main data from the writing device after the authentication of the display device.

2. The writing system according to claim 1, wherein at least one of the display-side control unit and the writing-side control unit maintains at least one of the display-side main communication unit and the writing-side main communication unit in an off state until the authentication is carried out, and shifts the at least one of the display-side main communication unit and the writing-side main communication unit from the off state to an on state after carrying out the authentication.

3. The writing system according to claim 1 or 2, wherein the writing-side authentication communication unit transmits the authentication data to the display-side authentication communication unit by a contactless communication.

4. The writing system according to claim 1 or 2,
wherein the writing device is attached to a human body, and
the writing-side authentication communication unit and the display-side authentication communication unit communicate with each other via a transmission path including the human body.

5. The writing system according to any one of claims 1 to 4, wherein the writing device includes an input unit to input authentication information of the display device into which the main data is to be written.

6. The writing system according to claim 5, wherein the writing device includes a display unit to display the authentication information that is input by the input unit.

7. The writing system according to any one of claims 1 to 6, wherein the writing device includes an internal power supply to drive at least the writing-side main communication unit.

8. The writing system according to claim 1,
wherein the writing device includes a writing-side communication unit including a first transmission mode, as the writing-side main communication unit, that transmits the main data by a wireless communication using a wireless signal with a first electrical intensity level, and including a second transmission mode, as the writing-side authentication communication unit, that transmits the authentication data by a second wireless communication using a wireless signal with a second electrical intensity level, and
the display device includes a display-side communication unit including a first receiving mode, as the display-side main communication unit, that receives the main data by the wireless communication, and including a second receiving mode, as the display-side authentication communication unit, that receives the authentication data by the second wireless communication.

9. The writing system according to any one of claims 1 to 8,
wherein at least one of the writing device and the display device includes a second storage unit,
the writing-side main communication unit and the display-side main communication unit are capable of switching a plurality of frequency channels,
the second storage unit stores communication history including the frequency channels and communication quality, the frequency channels being switched by the writing-side main communication unit and the display-side main communication unit, and
the writing-side control unit and the display-side control unit control frequency-channel switching performed by the writing-side main communication unit and the display-side main communication unit, by use of the communication history stored in the second storage unit.

10. The writing system according to any one of claims 1 to 9,
wherein the writing device includes a detection unit that detects an electrical intensity level of a wireless signal to be transmitted from the writing-side main communication unit,
the writing-side main communication unit functions to change the electrical intensity level of the wireless signal, and
the writing-side control unit adjusts the detected electrical intensity level of the wireless signal transmitted from the writing-side main communication unit depending on the electrical intensity level detected by the detection unit.
